# EUROPEAN PATENT APPLICATION

(11) **EP 1 826 219 A1**
(43) Date of publication of application: **29.08.2007**
(21) Application number: 06110406.3
(22) Date of filing: 24.02.2006
(51) Int. Cl.: C08B 31/18, D21H 17/28

(54) **Process for the manufacture of oxidized starch, oxidized starch and its use**

(71) Applicant: SOLVAY (Société Anonyme), 1050 Bruxelles (BE)
(72) Inventor: Dournel, Pierre, 1030, Brussels (BE); Ganhy, Jean-Pierre, 1170, Brussels (BE)
(74) Representative: Vande Gucht, Anne

(57) **Abstract**

Process for the manufacture of oxidized starch by reacting an aqueous slurry of starch with a peroxide compound, the reaction being carried out in the presence of ozone or by irradiating the slurry with UV light, the amount of peroxide compound used being lower than 30 % by weight calculated on the basis of the weight of dry starch. The oxidized starch can be used as additive for the paper industry or for the food industry.

## Description

The present invention is related to a process for the manufacture of oxidized starch. In particular, it is related to the manufacture of oxidized starch which can serve as additive for the paper industry or for the food industry.

In the food industry, as disclosed in the international application WO 00/15670, oxidized starch can be used as a thickener, for example in sauces, or to replace Arabic gum in products such as confectioneries.

It is also known to use oxidized starch as an additive for the paper industry. In this field, the purpose of adding the oxidized starch is usually to improve the strength of the paper sheet, and/or to result in a better printability of the paper sheet, and/or a better retention of cationic additives, and/or to improve its applicability as glue for the paper fibers.

For instance, oxidized starches have been used as coating binders, as disclosed in the international application WO 00/15670. The main purpose of coating paper is to improve its printability. The most important components of a coating are (a) pigments, such as titanium dioxide, calcium carbonate, clays and the like, (b) binders such as starch, and (c) water. The oxidation process is however carried out in the presence of a copper catalyst, which has the disadvantage of leading to an end product containing residual copper compounds. Also, the use of copper salts during the manufacture of the modified starch can lead to environmental problems as the effluents are contaminated with metals.

Another example is given in the international application WO 2003/018638, in which oxidized starch is used for the surface sizing of paper wherein the additive aims at influencing the paper's properties such as hydrophobicity, porosity and strength. The oxidation is however carried out using hypochlorite as oxidant, which leads to environmental problems due to the presence of chloride ions in the end product and in the water effluents of the process.

The publications of R.E. Harmon et al, Die Stärke, 1971, 23, 347-349 and 1972, 24, 8-11 disclose the oxidation of starch using hydrogen peroxide as oxidant in the presence of UV light under specific conditions. This process uses an oxidant which does not result in environmental problems and does not use a catalyst. However, the oxidized starch thus obtained is not suitable as additive for the paper industry.

The purpose of the present invention is to provide a new process for the manufacture of oxidized starch which does not present the above disadvantages and which enables to obtain oxidized starch which is convenient as additive for the paper industry or for the food industry.

The present invention therefore relates to a process for the manufacture of oxidized starch by reacting an aqueous slurry of starch with a peroxide compound, the reaction being carried out in the presence of ozone or by irradiating the slurry with UV light, the amount of peroxide compound used being lower than 30 % by weight calculated on the basis of the weight of dry starch.

One of the essential features of the present invention resides in the use of a low amount of the peroxide compound in the oxidation reaction. It has indeed been found that, when such a low amount is used, the oxidized starch presents the ideal characteristics to serve as additive for the paper industry. It has also been found that a useful additive for the paper industry must present an appropriate viscosity in solution (as explained below), that this viscosity must remain relatively stable in time, and that it must be possible to solubilize the oxidized starch in water at temperatures above 50°C. It is therefore recommended to control the viscosity in the process of the invention. Without being bound by any theory, it is believed that, in the process of the invention, the viscosity of the oxidized starch in solution is determined by the number of pending OH groups on the non-oxidized starch that have been oxidized. It follows therefrom that the viscosity of the oxidized starch in solution could be controlled within the framework of the process of the invention by the amount of peroxide compound used. Indeed, the more peroxide compound is added, the more pending OH groups onto the non-oxidized starch would be oxidized into carbonyl- and/or carboxyl groups, and the more the viscosity would be lowered. Lowering the viscosity would make the starch also easier to solubilize in water.

Another essential feature of the present invention resides in the combined use of (a) a peroxide compound and (b) the irradiation of UV light or ozone. This combination indeed allows to omit the use of another catalyst or activator.

In the process of the invention, the amount of peroxide compound used is generally lower than or equal to 20 % by weight calculated on the basis of the weight of dry starch, in particular lower than or equal to 15 % by weight, more particularly lower than or equal to 10 % by weight, preferably less than or equal to 5 % by weight, the most advantageous values being lower than or equal to 3 % by weight, for instance about 2.5 % by weight. The amount of peroxide compound is in most cases higher than or equal to 0.1% by weight, especially higher than or equal to 0.5 % by weight, for instance higher than or equal to 1 % by weight.

In the process of the invention, the reaction is advantageously carried out in the absence of any catalyst or activator other than ozone and UV light.

In the process of the invention, the aqueous slurry after having added the peroxide compound thereto contains commonly more than 20 % by weight of starch. The content of starch is often higher than or equal to 25 % by weight, especially higher than or equal to 30 % by weight, more particularly higher than or equal to 35 % by weight, for instance about 40 % by weight. Values of up to 50 % by weight are convenient.

The peroxide compound used in the process of the invention can be chosen from hydrogen peroxide or any other peroxide capable of forming hydrogen peroxide in situ in the aqueous slurry. Examples of peroxide compounds capable of forming in situ hydrogen peroxide are sodium percarbonate, sodium perborate, calcium peroxide, magnesium peroxide, zinc peroxide, peracids such as equilibrium grade peracetic acid, or mixtures thereof. The peroxide compound preferably consists of an aqueous hydrogen peroxide solution. Such hydrogen peroxide solutions often contain from 5 to 50 % by weight of hydrogen peroxide, preferably from 10 to 40 % by weight. Solutions containing about 35 % by weight give good results.

In the process of the invention, the oxidation reaction is generally carried out at a temperature, from 18 to 35°C. The temperature is preferably maintained below 50°C, in order to avoid solubilization of the starch during the reaction.

In the process of the invention, it is advantageous to adjust the pH of the reacting slurry to a value lower than or equal to 8, in particular lower than or equal to 7, more particularly lower than or equal to 6. The pH of the reacting slurry is advantageously adjusted to a value higher than or equal to 4, more preferably higher than or equal to 5. The pH can be adjusted by adding a base to the reacting slurry. An example of a suitable base is caustic soda, sodium carbonate, or sodium bicarbonate. The expression "reacting slurry" intends to denote the aqueous slurry containing starch to which the peroxide compound has been added and which is being irradiated with UV light or to which ozone is added and in which the starch is being oxidized.

The oxidation of the process of the invention can be carried out in any adequate oxidation reactor. Example of a suitable reactor is a double-jacket glassware reactor equipped with a stirrer. Another example is an apparatus such that the slurry is circulated via a pump through a glass funnel containing an UV lamp, the glass funnel being designed in such a way that its volume is smaller than the total volume of the slurry to be treated. This particular apparatus allows the optimization of the exposure time to UV light.

The duration of the oxidation reaction of the process of the invention is usually from 2 hours to 24 hours, preferably from 4 hours to 8 hours. In the case of an apparatus such as the one described here-above, with a glass funnel containing an UV lamp, the glass funnel volume being smaller than the total volume of the slurry to be treated, the duration of the circulation of the slurry through the funnel is usually from 2 hours to 24 hours, preferably from 4 hours to 8 hours, in order to obtain an average exposure time to UV light of from 5 minutes to 60 minutes, preferably from 15 minutes to 45 minutes, for example about 30 minutes.

After the oxidation reaction, the oxidized starch can be separated from the reacting slurry by any adequate separating method such as filtration. If necessary, the residual hydrogen peroxide can be destroyed by any conventional method such as the use of reducing agents, for example sodium thiosulfate, or such as the use of enzymes, for example catalase. The separated oxidized starch can then be dried by any adequate drying method for instance in a drying oven at temperatures from 40 to 120°C, preferably from 60 to 100°C.

The present invention also relates to the oxidized starch obtainable by the process described above.

Viscosity of the oxidized starch in solution is important for applications such as those of the paper industry. The oxidized starch of the invention generally presents, in an aqueous solution of 20 % by weight of dry starch and at 80°C, a viscosity of from 1 to 50 mPa.s, in particular of from 5 to 40 mPa.s, and most preferably from 10 to 30 mPa.s. The viscosity in solution is measured according to the method described in the examples below.

The viscosity of the oxidized starch of the invention is generally relatively stable in time. This stability is measured by measuring the viscosity of the above-mentioned solution before and after an ageing of 24 hours in an oven at 70°C. Generally, the viscosity after ageing does not increase by more than 5 mPa.s units from the initial viscosity. The viscosity does not decrease by more than 15 mPa.s units from the initial viscosity.

The oxidized starch of the invention can advantageously be used as an additive for the paper industry or for the food industry. The present invention therefore also relates to the use of the above-described oxidized starch as an additive for the paper industry. It is especially suitable as coating binder or for the surface sizing of paper. In the food industry it can be used as an adhesive or as a binding agent.

In view of the above, the present invention also relates to the use of hydrogen peroxide together with UV light irradiation or with ozone in the oxidation of starch for the manufacture of an additive for the paper industry or for the food industry.

The present invention is further illustrated below without limiting the scope thereto.

### Example 1 (according to the invention)

100 g of potato starch has been slurried into demineralised water. The amount of water added was such that the consistency of the slurry was 40 % by weight of dry matter. To this slurry was added an amount of hydrogen peroxide corresponding to 2.5 % by weight of the weight of dry starch. The hydrogen peroxide was added in the form of an aqueous solution containing 50 % by weight of H₂O₂ (INTEROX® ST50).

The obtained slurry is irradiated with UV light (wavelength of 254 nm) during 4 hours. At the end of this period, when the reaction was completed, the obtained slurry was washed with water until a final pH value of 6 was reached.

The oxidized starch thus obtained was filtered off and dried in an oven at 70°C during 16 hours.

The viscosity in solution was measured by preparing an aqueous suspension containing 20 % of dry starch. This suspension was heated up to about 85°C using a water bath. The oxidized starch went into solution. The viscosity of this solution was measured at 80°C using a viscometer of the Brookfield type (Model DV-II+). The viscosity was 24 mPa.s and after ageing 10 mPa.s.

### Example 2 (according to the invention)

500 g of potato starch has been slurried into demineralised water. The amount of water added was such that the consistency of the slurry was 40 % by weight of dry matter. To this slurry was added an amount of hydrogen peroxide corresponding to 2.5 % by weight of the weight of dry starch. The hydrogen peroxide was added in the form of an aqueous solution containing 50 % by weight of H₂O₂ (INTEROX® ST50).

The obtained slurry is then circulated via a pump through a glass funnel containing the UV lamp (wavenlength of 185 nm). The glass funnel is designed in such a way that its volume is smaller than the total volume of the slurry to be treated. The pH of the slurry is adjusted at pH 6 during the reaction by a continuous addition of caustic soda. The slurry was circulated through the funnel during 4 hours which gave an average exposure time to UV light of 30 minutes.

At the end of the reaction, the obtained slurry was filtered and the solid was washed with water.

The residual hydrogen peroxide was destroyed by a conventional method using enzymes (catalase). The oxidized starch thus obtained was dried in an oven at 70°C during 16 hours.

The viscosity of the starch solution was measured by preparing an aqueous suspension containing 20 % of dry starch. This suspension was heated up to about 85°C using a water bath. The oxidized starch went into solution. The viscosity of this solution was measured at 80°C using a viscometer of the Brookfield type (Model DV-II+). The viscosity was 28 mPa.s and 14 mPa.s after 24 hours ageing.

## Claims

1. - Process for the manufacture of oxidized starch by reacting an aqueous slurry of starch with a peroxide compound, the reaction being carried out in the presence of ozone or by irradiating the slurry with UV light, the amount of peroxide compound used being lower than 30 % by weight calculated on the basis of the weight of dry starch.

2. - Process according to claim 1, wherein the amount of peroxide compound used is lower than or equal to 10 % by weight calculated on the basis of the weight of dry starch, preferably less than or equal to 5 % by weight.

3. - Process according to claim 1 or 2, wherein the reaction is carried out in the absence of any catalyst or activator other than ozone and other than UV light.

4. - Process according to any one of claims 1 to 3, wherein the slurry contains more than 20 % by weight of starch, preferably more than 30 % by weight.

5. - Process according to any one of claims 1 to 4, wherein the peroxide compound consists of an aqueous hydrogen peroxide solution.

6. - Process according to any one of claims 1 to 5, wherein the reaction is carried out at a temperature from 18 to 35°C.

7. - Process according to any one of claims 1 to 6, wherein the pH of the reacting slurry is adjusted during or after the reaction to a value from 4 to 8.

8. - Oxidized starch obtainable by the process of any one of claims 1 to 7.

9. - Oxidized starch according to claim 8, presenting a viscosity of from 10 to 30 mPa.s at 80°C in an aqueous solution of 20 % by weight of dry starch.

10. - Use of the oxidized starch of any of claims 8 to 9 as an additive for the paper industry, or for the food industry.

11. - Use of hydrogen peroxide together with UV light irradiation or with ozone in the oxidation of starch for the manufacture of an additive for the paper industry or for the food industry.
